# EUROPÄISCHE PATENTSCHRIFT

(11) **EP 0 498 217 B1**
(45) Veröffentlichungstag und Bekanntmachung des Hinweises auf die Patenterteilung: **05.03.1997**
(21) Anmeldenummer: 92101060.9
(22) Anmeldetag: 23.01.1992
(51) Int. Cl.: C09B 35/215, C09B 35/50, C09B 35/56, C09B 31/16, G02B 5/30

(54) **Polfolienfarbstoffe und daraus hergestellte Polfolien**
Dyes for polarising films and films made thereof
Colorants pour films polarisants et films fabriqués avec ces colorants

(30) Priorität: 05.02.1991 DE 4103346
(43) Veröffentlichungstag der Anmeldung: 12.08.1992
(73) Patentinhaber: BAYER AG, 51368 Leverkusen (DE)
(72) Erfinder: Claussen, Uwe, Dr., W-5090 Leverkusen 3 (DE)

(56) Entgegenhaltungen:
- EP-A- 0 013 750
- DE-A- 3 512 836

## Beschreibung

Die Erfindung betrifft neue dichroitische Tris- und Tetrakis-azo-Farbstoffe mit blaustichig roter bis blaugrüner Farbnuance sowie lichtpolarisierende Filme auf der Basis wasserlöslicher, transparenter, organischer Polymere insbesondere von Polyvinylalkohol (PVAL), die die neuen dichroitischen Farbstoffe enthalten.

Filme auf Basis von Polyvinylalkohol (PVAL), die Iod oder dichroitische Farbstoffe als polarisierende Agentien enthalten, sind bekannt.

Technische Verwendung haben bislang allein die Iod-haltigen Polarisatoren gefunden, die beispielsweise in den passiven Flüssigkristall-Displays zur Sichtbarmachung der Information eingesetzt werden. Bei Abwesenheit von Feuchtigkeit kennzeichnen diese Filme eine ausgezeichnete Lichtechtheit und hervorragende dichroitische Eigenschaften im langwelligen Bereich des sichtbaren Spektrums. Das wirksame Agens dieser Filme ist der Iod-PVAL/Komplex (M.M. Zwick, J. Appl. Polym. Sci.; 9 2393-2424 (1965)), der das Tageslicht zwar breitbandig, aber nicht vollständig absorbiert. Im kurzwelligen (grün-gelben) Bereich des Spektrums liegt ein Bereich verminderter Extinktion, weswegen die Folien eine blaue Eigenfarbe zeigen.

Dies hat nachteilige Folgen, wenn man nach dem Durchgang durch die Folie weißes Licht erhalten will. Das unpolarisiert durchgelassene Licht vermindert den Dichroismus und damit die Polarisationsleistung in diesem Bereich. Zur Steigerung des Dichroismus ist man gezwungen, die Konzentration an Iod-Komplex zu erhöhen.

Diese Korrektur im kurzwelligen Bereich zieht aber eine übermäßige Extinktion im langwelligen Bereich nach sich. Die Folge ist eine deutliche Schwächung des durchgelassenen Lichts in der Durchgangsstellung. Eine optische Anzeige, die mit dieser Folie bestückt wird, ist in ihrer Helligkeit vermindert. Um zu vertretbaren Helligkeiten zu gelangen, muß man Kompromisse schließen.

Eine wichtige kritische Meßgröße einer universal verwendbaren optischen Anzeige ist die Ablesbarkeit bei verschiedenen Beleuchtungsverhältnissen, sie wird üblicherweise als "Perceived contrast ratio" (PCR = Transmission in Durchgangsstellung (TII) Transmission in Sperrstellung (T⊥) angegeben. Aus diesem folgt, daß die Transmission einerseits in der Sperrstellung (T⊥) so klein wie möglich (Ablesbarkeit bei Dunkelheit), andererseits in der Durchgangsstellung (TII) so groß wie möglich (Ablesbarkeit bei Helligkeit) gemacht werden muß. Dies erfordert eine ganz gleichmäßige, möglichst hohe Polarisationsleistung des Filters über den gesamten Bereich des sichtbaren Spektrums, welche mit der Iodfolie prinzipiell nicht erreicht werdenkann.

Die Wirkungsweise einer Polfolie und die zugrunde liegenden physikalischen Prinzipien und auch die strukturellen Voraussetzungen dafür in der Matrix sind z.B. aus US 4 440 451 bekannt.

Es hat nicht an Versuchen gefehlt, Jod durch Farbstofftripel dichroitischer Farbstoffe zu ersetzen, um ein Neutralgrau mit gleichmäßigen Dichroismus zu erzeugen. Allerdings bedarf es hierzu einer Gamme sehr leistungsfähiger Farbstoffe. Sie müssen neben guten Licht- und Wetterechtheiten eine hohe Extinktion und einen hohen Dichroismus in der Matrix haben. So sind vorzugsweise Polyazofarbstoffe vorgeschlagen worden beispielsweise auf der Basis der 4-Nitro-4'-amino-flavonsäure (JA 59-145 255, 60-156 759, 60-168 743 oder des substituierten Benzidins (JA 61 255 304). Daneben sind zahlreiche Direktfarbstoffe genannt worden.

Obgleich aber der Dichroismus bei den Farbstoffen eine verbreitete Eigenschaft ist, (vgl. W. Hanle, H. Scherer, Zeitschr. Naturforsch. 6a 437-439 (1951)) gelang es bisher nicht, die dichroitischen und spektralen Eigenschaften der Jodfolie zu erreichen oder zu übertreffen. Dies ist insbesondere dem Fehlen guter Blaunuancen zuzuschreiben. Es sind in der Literatur einige Blaufarbstoffe als dichroitisch beschrieben, so z.B. Direct Blue 1, 106, 107,109, 190, 202. Dichroitische Azofarbstoffe, die die 4-Oxy-7-amino-naphthalin-2-sulfonsäure (I-Säure) enthalten, sind aus den Offenlegungsschriften JA 01 252 904, 01 248 105, 01 167 703, 61 255 304, WO 89 501 bekannt. Die dort offenbarten Verbindungen sind dichroitisch, jedoch reichen weder der Effekt noch die Absorptionswellenlänge aus, um die im Blaubereich vorhandene Lücke zu schließen.

In EP-A-0 013 750 sind Tris- und Tetrakisazo-stilbenfarbstoffe beschrieben, die auf cellulosischen Materialien, wie Baumwolle oder Papier, oder auf Leder dunkelblaue Färbungen ergeben.

Wir haben nun überraschend gefunden, daß bestimmte Azofarbstoffe hervorragende dichroitische Eigenschaften insbesondere auch im roten, langwelligen Spektralbereich des sichtbaren Lichtes aufweisen und sich sehr gut zur Herstellung lichtpolarisierender Filme oder Folien eignen.

(Eine im folgenden einmal gegebene Definition eines Restes oder Index wird im weiteren Text beibehalten).

Die Erfindung betrifft dichroitische Farbstoffe, die in Form der freien Säure der allgemeinen Formel I 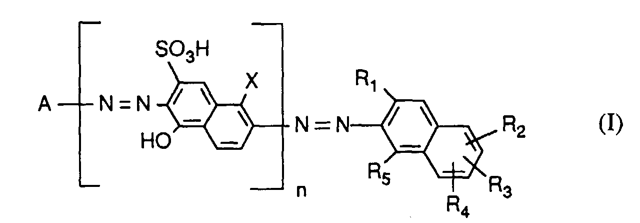 entsprechen,
bei der n für die Zahlen 1 oder 2 steht,
- A: einen Rest 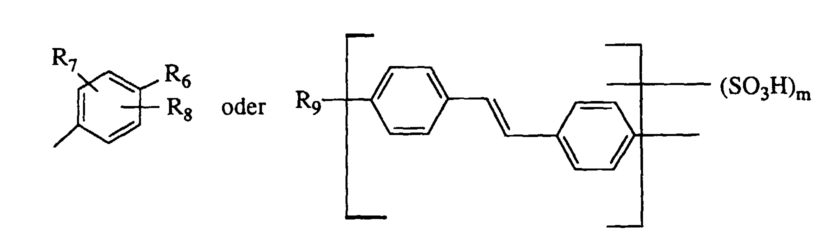 bedeutet,
- R₁ und R₃: unabhängig voneinander Wasserstoff oder SO₃H
- R₂: Wasserstoff, NH₂, NH-Acyl, N(H)-alkyl, NH-aryl,
- R₄: Wasserstoff, OH, OR, SO₃H, Cl oder den Rest -N=N-A'
in dem
R ein aliphatischer Rest mit bis zu 4 C-Atomen ist und
A' den Rest 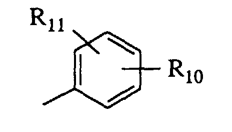 bedeutet, worin
R₁₁ H, NO₂, CN, OR, SO₃H, CF₃, Halogen oder die für die Reste R₂ oder R angegebene Bedeutung hat,
R₁₀ H, COOH, COOR, CN, NO₂, Halogen, OH, OR, SO₃H oder die für die Reste R₂ oder R angegebene Bedeutung hat bedeutet,
- R₅: OH, NH₂ und
- X: Cl, SO₃H oder H
bedeuten und weiterhin
- R₆: NO₂, CN, CF₃ bedeutet oder die für die Reste R₄ oder R₂ angegebene Bedeutung hat,
- R₇: COOH, COOR, CN, NO₂, Halogen, OH, OR, R, SO₃H bedeutet oder die für R₂ angegebene Bedeutung hat
- R₈: H, R, OR
- R₉: NO₂, CN, COOR, den Rest -N=N-A' bedeutet oder die für R₂ angegebene Bedeutung hat und
m die Zahlen 1 oder 2
bedeutet.

Bevorzugte Naphthalin-Komponenten entsprechen der allgemeinen Formel II 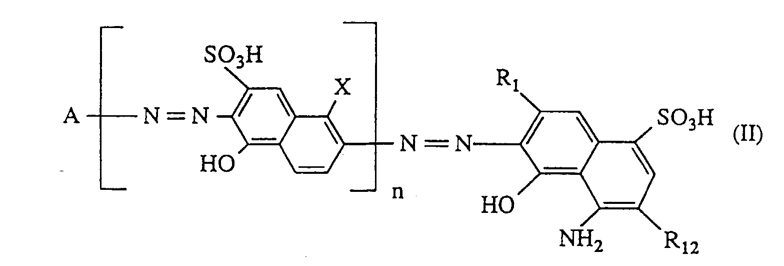 worin
- X: für Cl, SO₃H oder H,
- n: für die Zahlen 1 oder 2 und
- R₁₂: bei R₁ = H für die Reste H, SO₃H oder -N=N-A₁ und bei R₁ = SO₃H für die Reste H oder-N=N-A₁ steht, wobei
A₁ den Rest bedeutet, 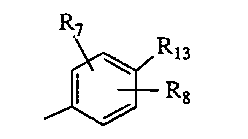 bedeutet, ,
worin
R₁₃ für H, NO₂, CN, OR, SO₃H, Cl oder den Rest -N=N-A' steht oder die für den Rest R₂ angegebene Bedeutung hat und
A', R₇ und R₈ die oben angegebene Bedeutung haben.

Weiterhin sind Farbstoffe der allgemeinen Formel III 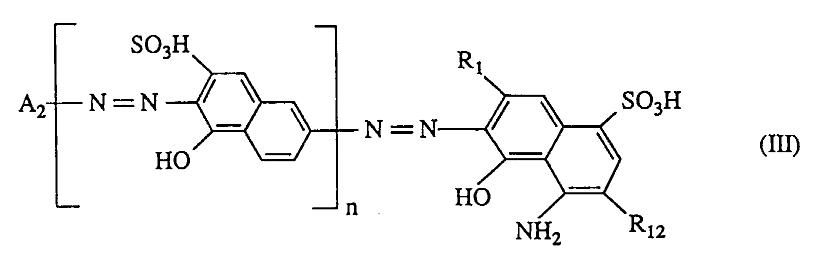 besonders bevorzugt,
worin
- A₂: für den Rest 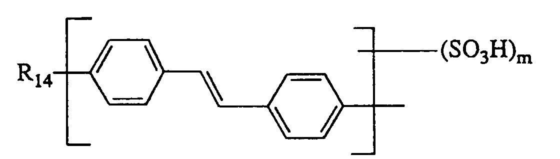 steht
indem
- R₁₄: für den Rest 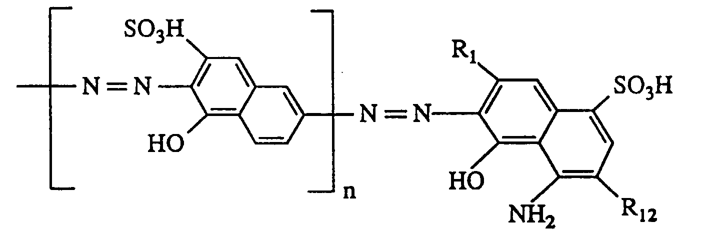 steht, und
- R₁₂: bei R₁ = H für die Reste H, SO₃H oder -N=N-A₁ und bei R₁ = SO₃H für die Reste H oder -N=N-A₁ steht, wobei A₁ die oben angegebene Bedeutung hat,
- m: die Zahlen 1 oder 2 bedeutet,
und
- n: die Zahlen 1 oder 2 bedeutet.

Die Farbstoffe sind neu. Sie lassen sich auf den in der Chemie der Azo-farbstoffe üblichen Wegen durch Diazotierung und Kupplung herstellen.

Die Erfindung betrifft ferner lichtpolarisierende Filme oder Folien, die ein wasserlösliches organisches Polymer und einer oder mehrere Verbindungen der Formel I, bevorzugt Verbindungen der Formeln II oder III, oder Mischungen mit anderen gegebenenfalls auch dichroitischen Farbstoffen enthalten.

Bei dem organischen Polymer handelt es sich vorzugsweise um ein transparente Filme bildendes orientiertes Polymer, das mit saure Gruppen enthaltenden Farbstoffen verträglich ist. Beispiele für solche Polymere sind Polyamide, Celluloseacetat, Vinylalkoholhomo- und copolymere, Vinylacetathomo- und copolymere, wobei als Comonomere z.B. Ethylen, Propylen, Crotonsäure, (Meth)acrylsäure, Maleinsäure vorliegen können. Bevorzugt eingesetzt werden Polyvinylalkohole, die durch vollständige oder teilweise Verseifung von Polyvinylacetat hergestellt worden sind, insbesondere Typen, die in 4 %iger wäßriger Lösung eine Viskosität > 4 mPas, vorzugsweise 20-70 mPas, bei 20°C und einem Verseifungsgrad > 80 Mol-%, zugsweise 90-100 Mol-%, aufweisen.

Die Filme haben ungereckt eine Schichtdicke von 5 bis 50 µm, im gereckten Zustand eine Dicke von 1 bis 40 µm, vorzugsweise von 5 bis 15 µm.

Die Filme enthalten vorzugsweise 0,01-10 Gew.-%, besonders bevorzugt 0,5-6 Gew.-%, Farbstoffe bezogen auf das Filmgewicht.

Die Einfärbung der Filme geschieht auf bekannte Weise, beispielsweise durch Einfärben der in Wasser gelösten Polymeren. Aus der Lösung wird der Film in an sich bekannter Weise hergestellt, indem man einen Rohfilm von 5 bis 150 µm, vorzugsweise 15 bis 50 µm, Dicke herstellt und diesen bei einer Temperatur von 60 bis 180°C, vorzugsweise von 80 bis 160°C, um 200 bis 1.000 % streckt.

Es empfiehlt sich, die Farbstoffe oder Farbstoffsalze vor ihrem Einsatz, z.B. durch Umkristallisieren, Extraktion und/oder Dialyse von Fremdsalzen zu befreien.

Gewünschtenfalls können die farbstoffhaltigen Filme auch einer Nachbehandlung, z.B. mit wäßriger Borsäurelösung, zwecks Verbesserung der Feuchtebeständigkeit oder der Lichtdurchlässigkeit unterworfen werden. Die Bedingungen unter denen diese Nachbehandlung durchgeführt wird, können unabhängig vom Filmmaterial und Farbstoff schwanken. Vorzugsweise arbeitet man mit einer 1 bis 15 gew.-%igen, besonders bevorzugt 5 bis 10 gew.-%igen, Borsäurelösung bei 30 bis 80°C, besonders bevorzugt bei 50 bis 80°C. Vorzugsweise setzt man der Borsäurelösung Tenside und gegebenenfalls anorganische Salze zu. Die Tenside können nicht-ionisch, kationisch oder anionisch sein, bevorzugt sind sie nichtionisch.

Beispiele für nicht-ionische Tenside sind: Additionsprodukte von Ethylenoxid an höhere Alkohole oder Phenole, beispielsweise Nonylphenol. Vorzugsweise verwendet man, bezogen auf Wasser, 0,005 bis 0,5 Gew.-%, besonders bevorzugt 0,02 bis 0,2 Gew.-%, Tensid. Als anorganische Salze kommen vorzugsweise Na-Sulfat, und weiterhin K-Sulfat, Na-Chlorid, K-Chlorid, Na-Nitrat in Betracht. Bezogen auf Wasser werden vorzugsweise 0,1 bis 5 Gew.-%, besonders bevorzugt 0,3 bis 3 Gew.-% anorganische Salze eingesetzt. Gewünschtenfalls kann noch eine Fixierungsbehandlung mit einer wäßrigen Lösung einer hochmolekularen kationischen Verbindung vorgenommen werden.

Der Dichroismus des Systems läßt sich durch Zusätze niederer mehrwertiger Alkohole wie Methanol, Ethanol oder Glykol, Glyzerin, Trimethylolethan, Trimethylolpropan, Pentaerythrit, Sorbit, deren Ether wie Glykolmonomethylether, Glykolmonoethylether, Glykoldimethylether, niederen Hydroxyaminen wie Propanolamin oder Amiden wie DMF, N-Methylpyrrolidon, Pyrrolidon, ε-Caprolactam zur Gießlösung beträchtlich verstärken. Die Additive können allein oder vorteilhafter, in Mischungen eingesetzt werden, wobei als Mischungsbestandteile auch niedrige einwertige Alkohole, z.B. Methanol, Ethanol, i-Propanol auftreten können.

Die Additive werden der Gießlösung vorzugsweise in Mengen zugesetzt, die 0,5 bis 50 Gew.-%, bezogen auf 100 Gew.-% der Gießlösung, ausmachen.

Zusätzlich können oberflächenaktive Verbindungen zur Steuerung der Oberflächenspannung eingesetzt werden. Geeignete oberflächenaktive Verbindungen sind beispielsweise Sulfonsäuren, wie Alkansulfonsäuren, insbesondere Sulfobernsteinsäure-octylester. Perfluoralkansulfonsäuren, insbesondere Perfluoroctansulfonsäure und ihr Tetraalkylammoniumsalz, beispielsweise das Tetraethylammoniumsalz, Sulfate, insbesondere sulfatierte Alkylphenolpolyglykolether oder Alkylsulfonate, amphotere Tenside, insbesondere Alkanamidopropylbetaine, beispielsweise Lauramidopropylbetain oder die in CA mit den folgenden REG-Nrn. aufgeführten Verbindungen: 73772-45-9, 96565-37-6, 4292-10-8, 59272-84-3, 25729-05-9, 6179-44-8, 21244-99-5, 58793-79-6, 32954-43-1, 92836-76-5 oder nichtionische Tenside wie 4-Octylphenolpolyglykolether.

Die lichtpolarisierenden Filme oder Folien können in an sich bekannter Weise mit anderen doppelbrechungsfreien Materialien compoundiert oder laminiert werden. Als Schutzüberzug eignen sich z.B. Folien aus einem Tetrafluorethylen-hexafluorethylen-Copolymer oder einem anderen Fluorkohlenwasserstoff-Harz, einem Polyester-, Polyolefin- oder Polyamid-Harz, einem Polycarbonat oder Celluloseester, vorzugsweise -(tri)acetat, -propionat oder -butyrat.

Die erfindungsgemäßen Farbstoffe finden Verwendung allein oder in Mischungen als dichroitische Farbstoffe in Polarisationsfiltern, die daraus herstellbaren Filme oder Folien finden Verwendung als Polarisationsfilter, beispielsweise zum Sichtbarmachen geordneter Strukturen in der Analytik von Polymeren und in biologischem Material.

Die angegebenen Formen sind die der entsprechenden freien Säuren. Die Farbstoffe werden im allgemeinen in Form der Alkalisalze, insbesondere der Na-Salze isoliert.

Die in den Beispielen genannten Gewichte beziehen sich auf die freie Säure.

### Beispiel 1

4-Nitro-ortho-Sulfanilsäure wird diazotiert und neutral auf I-Säure gekuppelt. 43 mMol dieses Farbstoffs werden in 200 ml Wasser gelöst und indirekt diazotiert. Nach 1 h Nachrühren wird der Überschuß an salpetriger Säure mit Amidosulfonsäure entfernt und eine Lösung von 43 mMol 4-Hydroxy-7-amino-naphthalin-2,8-disulfonsäure in 200 ml Wasser zugegeben. Man läßt über Nacht bei pH 8-9 auskuppeln, saugt den Farbstoff ab und spaltet die Sulfogruppen durch 12 h Kochen in einer 1:1 Mischung Wasser/N-Methylprrolidon mit 60 ml konzentrierter Salzsäure ab. Dieser Farbstoff wird diazotiert und in eine Lösung von 7,2 mMol eines Farbstoffs in 100 ml Wasser getropft, der durch saure Kupplung von p-Sulfanilsäure auf 4-Amino-5-hydroxy-naphthalin-sulfonsäure erhalten wurde. Man rührt über Nacht nach, fällt den Farbstoff durch Zugabe von Aceton, löst gegebenenfalls noch einmal um und wäscht mit wasserhaltigem Aceton, 0,1 g Farbstoff werden in 9,9 g Mowiol® 28-99 (Hersteller Hoechst AG) und 190 ml Wasser gelöst und aus dieser Lösung eine 500 µ dicke Schicht gegossen, die nach dem Verdunsten des Wassers eine ca. 50 µ dicke, dunkelblaue Folie. Diese wird bei 130°C um 500 % gestreckt. Das dichroitische Verhältnis (CR) beträgt 15,3 bei 650nm.

### Beispiel 2

2-Amino-5-nitro-benzolsulfonsäure wird diazotiert und neutral auf I-Säure gekuppelt. 43 mMol dieses Farbstoffs werden in 200 ml Wasser gelöst und indirekt diazotiert. Nach 1 h Nachrühren wird der Überschuß an salpetriger Säure mit Amidosulfonsäure entfernt und eine Lösung von 43 mMol 4-Hydroxy-7-aminonaphthalin-2,8-disulfonsäure in 200 ml Wasser zugegeben. Man läßt über Nacht bei pH 8-9 auskuppeln, saugt den Farbstoff ab und spaltet die Sulfogruppe durch 12 h Kochen in einer 1:1 Mischung Wasser/N-Methylpyrrolidon mit 60 ml konzentrierter Salzsäure ab. Dieser Farbstoff wird diazotiert und in eine Lösung von 7,2 mMol 4-Amino-5-hydroxy-naphthalin-1,3-disulfonsäure in 100 ml Wasser getropft. Man rührt über Nacht nach, fällt den Farbstoff durch Zugabe von Aceton, löst gegebenenfalls noch einmal um und wäscht mit wasserhaltigem Aceton. 0,1 g Farbstoff werden in 9,9 g Polyvinylalkohol (PVAL) Typ Mowiol®28-99 (Hersteller Hoechst AG) und 190 ml Wasser gelöst und aus dieser Lösung eine 500 µ dicke Schicht gegossen, die nach dem Verdunsten des Wassers eine ca. 50 µ dicke, dunkelblaue Folie ergibt. Diese wird bei 130°C um 500 % gestreckt Der CR-Wert beträgt 29,9 bei 610 nm. Verwendet man an Stelle der 4-Amino-5-hydroxy-naphthalin-1,3-disulfonsäure die folgenden Säuren, so erhält man:

| | CR | λ |
|---|---|---|
| 4-Hydroxy-5-amino-naphthalin-2,8-disulfonsäure | 26,8 | 600 |
| 4-Hydroxy-5-amino-naphthalin-2,7-disulfonsäure | 24,9 | 590 |
| 4-Hydroxy-7-amino-naphthalin-1,5-disulfonsäure | 24,8 | 570 |
| 4-Hydroxy-5-ethoxy-naphthalin-2,7-disulfonsäure | 22,1 | 570 |
| 4-Hydroxy-6-amino-naphthalin-2-sulfonsäure | 19,0 | 630 |

- CR: Dichroitisches Verhältnis
- λ: Wellenlänge in nm

### Beispiel 3

p-Sulfanilsäure wird diazotiert und neutral auf I-Säure gekuppelt. Man verfährt weiter wie in Beispiel 1 kuppelt aber in der letzten Stufe auf 4-Amino-5-hydroxy-naphthalin-1,3-disulfonsäure, wobei ein blauer Farbstoff folgender Formel erhalten wird:

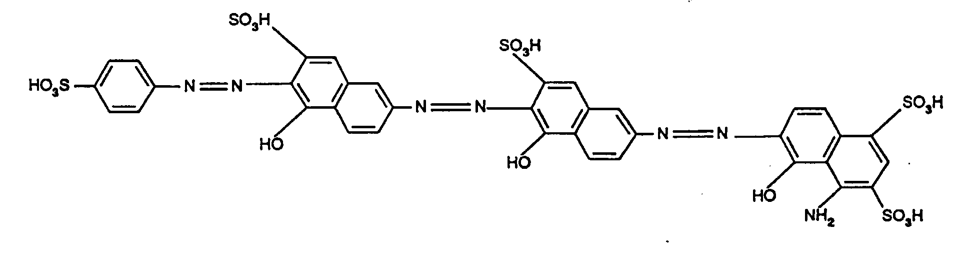

Man bereitet daraus eine Folie wie in Beispiel 1 beschrieben, das dichroitische Verhältnis beträgt 35,6 bei 600 nm. Verwendet man an Stelle der 4-Amino-5-hydroxy-naphthalin-1,3-disulfonsäure die 4-Amino-5-hydroxy-naphthalin-2,8-disulfonsäure, so erhält man einen blauen Farbstoff, dessen Dichroismus 36,1 bei 600 nm beträgt. Verwendet man an Stelle der Sulfanilsäure die 4-Amino-azobenzol-4'-sulfonsäure, so hat der entstehende Farbstoff nach dem Einarbeiten in PVAL gemäß Beispiel 1 einen Dichroismus von 39,2 bei 620 nm.

### Beispiel 4

Man diazotiert 4,4'-Diamino-stilben-2-sulfonsäure und kuppelt wie in Beispiel 1 beschrieben auf 4-Oxy-7-acetylamino-naphthalin-2-sulfonsäure und verseift den entstandenen Farbstoff. Dieser wird tetrazotiert und bei pH 6,5 auf 4-Amino-5-oxynaphthalin-1,3-disulfonsäure gekuppelt. Es entsteht der Farbstoff der Formel 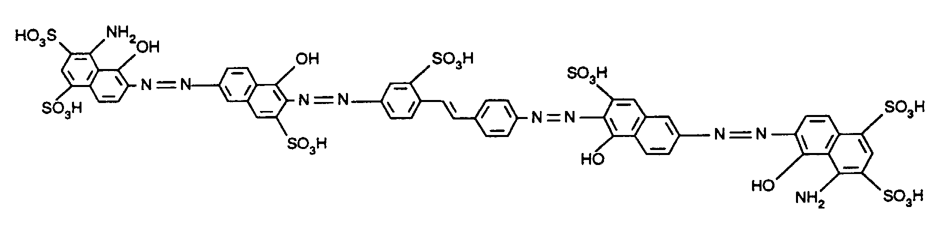 mit einem Dichroismus von 48,1 bei 640 nm. Verwendet man an Stelle der 4-Amino-5-oxy-naphthalin-1,3-disulfonsäure die 4-Oxy-7-benzoylamino-naphthalin-2-sulfonsäure, so erhält man einen blauen Farbstoff, der nach Einarbeiten in PVAL gemäß den in Beispiel 1 gegebenen Bedingungen einen Dichroismus von 39,7 bei 620 nm zeigt. Verwendet man an Stelle der 4-Amino-5-oxy-naphthalin-1,3-disulfonsäure die 4-Hydroxy-5-amino-naphthalin-2,8-disulfonsäure, so erhält man ebenfalls einen blauen Farbstoff, der nach Einarbeiten in PVAL gemäß den in Beispiel 1 gegebenen Bedingungen einen Dichroismus von 45,3 bei 640 nm zeigt.

### Beispiel 5

Man diazotiert 4-Nitro-4'-aminostilben-2-sulfonsäure und kuppelt wie in Beispiel 1 angegebenen auf 4-Oxy-7-acetylamino-naphthalin-2-sulfonsäure und verseift den entstandenen Farbstoff. Diese wird erneut diazotiert und auf 4-Amino-5-oxynaphthalin-1,3-disulfonsäure gekuppelt. Man isoliert einen blauen Farbstoff, der in PVAL gemäß Beispiel 1 eingearbeitet, einen CR-Wert von 33,2 bei 620 nm aufweist.

### Beispiel 6

43 mMol 2-Aminobenzthiazol-7-sulfonsäure werden in 120 ml 85 %iger Phosphorsäure/Eisessig (2:1) gelöst. Man tropft 15 g Nitrosylschwefelsäure hinzu und läßt 1 h nachrühren. Man entfernt den Überschuß an Diazotierungsmittel mit Harnstoff. Dann tropft man eine Lösung aus 50 ml Eisessig und 5,95 g 2-Methoxy-6-methylanilin hinzu und trägt nach 1 h auf 200 ml Wasser aus. Man fällt den Farbstoff mit NaCl-Lösung aus, saugt die Paste ab und trocknet. 14,5 mMol dieses Farbstoffs werden wie eben beschrieben diazotiert. Man legt eine Lösung von 100 ml Wasser, das 14,5 mMol 2-Amino-5-oxy-naphthalin-1,7-disulfonsäure und 15 % Soda vor und tropft die Diazoniumsalzlösung hinzu, wobei man durch weitere Zugabe von Sodalösung den pH-Wert bei 8-8,5 hält. Man saugt ab und kocht die Paste 2,5 h in 300 ml Wasser mit 60 ml HCl konz. Der schwerlösliche Farbstoff wird nach dem Erkalten abgesaugt. 7,2 mMol dieses Farbstoffs werden in Phosphorsäure/Eisessig wie beschrieben diazotiert. Man legt eine Lösung von 7,2 mMol 4-Amino-5-oxynaphthalin-1,3-disulfonsäure vor und tropft die Diazotierungslösung hinzu, wobei der pH bei 8-8,5 gehalten werden muß. Nach dem Absaugen und Waschen wird der blaue Farbstoff getrocknet und in PVAL gemäß Beispiel 1 eingebaut. Im Dünnschichtchromatogramm ist eine violette Begleitkomponente erkennbar. Man findet einen CR-Wert von 14,4 bei 650 nm.

## Patentansprüche

1. Dichroitische Farbstoffe, die in Form der freien Säuren der allgemeinen Formel I 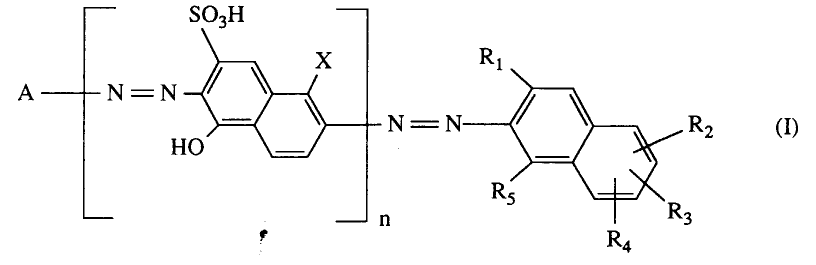 entsprechen,
bei der n für die Zahlen 1 oder 2 steht,
A einen Rest 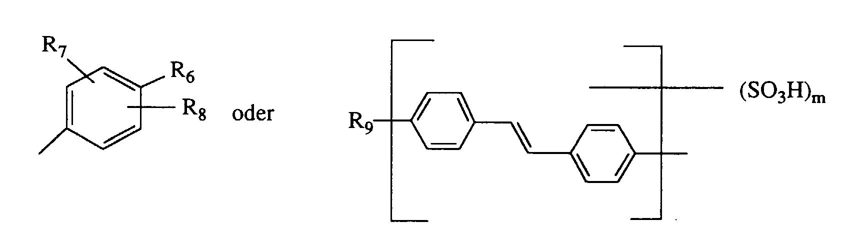 bedeutet,
R₁ und R₃ unabhängig voneinander Wasserstoff oder SO₃H
R₂ Wasserstoff, NH₂, NH-Acyl, N(H)-alkyl, NH-aryl,
R₄ Wasserstoff, OH, OR, SO₃H, Cl oder den Rest -N=N-A'
in dem
A' den Rest 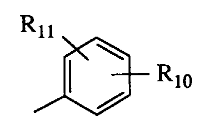 bedeutet, worin
R₁₁ H, NO₂, CN, OR, SO₃H, CF₃, Halogen oder die für die Reste R₂ oder R angegebene Bedeutung hat,
R₁₀ H, COOH, CN, NO₂, Halogen, OH, OR, SO₃H oder die für die Reste R₂ oder R angegebene Bedeutung hat
und
R ein aliphatischer Rest mit bis zu 4 C-Atomen ist
und
R₅ OH, NH₂ und
X Cl, SO₃H oder H
bedeuten und weiterhin
R₆ NO₂, CN, CF₃ bedeutet oder die für die Reste R₄ oder R₂ angegebene Bedeutung hat,
R₇ COOH, CN, COOR, NO₂, Halogen, OH, OR, R, SO₃H bedeutet oder die für R₂ angegebene Bedeutung hat
R₈ H, R, OR
R₉ NO₂, CN, COOR, den Rest -N=N-A' bedeutet oder die für R₂ angegebene Bedeutung hat und
m die Zahlen 1 oder 2
bedeutet.

2. Dichroitische Farbstoffe der allgemeinen Formel III 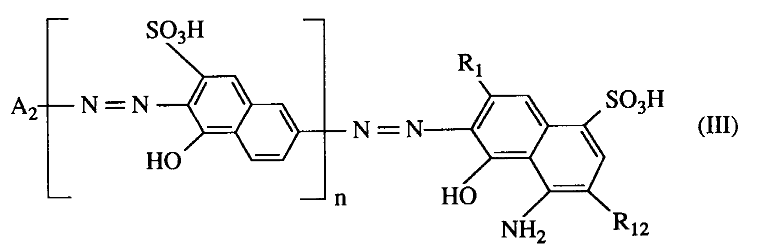 worin
A₂ für den Rest 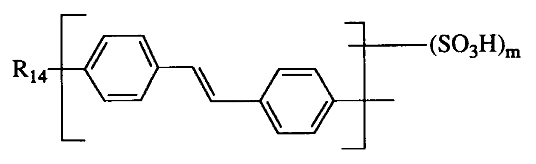
und
R₁₄ für den Rest 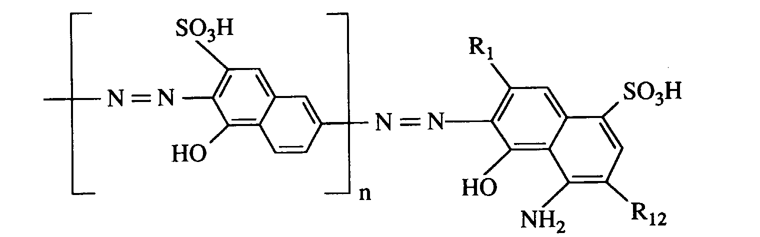 steht, in dem
R₁₂ bei R₁ = H Wasserstoff, SO₃H oder -N=N-A₁ und bei R₁ = SO₃H Wasserstoff oder -N=N-A₁ bedeutet, wobei
A₁ den Rest 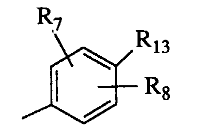 bedeutet,
worin
R₁₃ für H, NO₂, CN, OR, SO₃H, Cl oder den Rest -N=N-A' steht oder die für den Rest R₂ in Formel I angegebene Bedeutung hat und
A', R₇, R₈ und R die in Anspruch 1 bei Formel I angegebene Bedeutung haben,
und
n oder m die Zahlen 1 oder 2 bedeutet.

3. Verwendung der Farbstoffe gemäß Anspruch 1 zur Herstellung von polarisierenden Filmen oder Folien.

4. Lichtpolarisierende Filme oder Folien enthaltend organische wasserlösliche Polymere und eine oder mehrere Verbindungen der Formel I 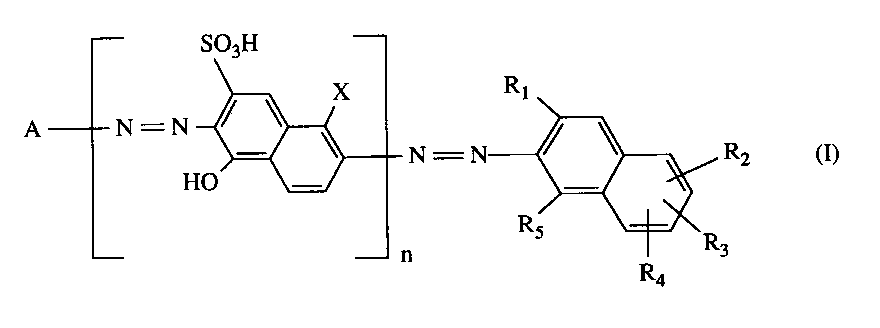 in der
n für die Zahlen 1 oder 2 steht
und
die Reste A, R₁, R₂, R_{3,} R₄, R₅, X und A' die in Anspruch 1 für die Reste in Formel I angegebene Bedeutung haben allein oder in Mischung mit anderen gegebenenfalls dichroitischen Farbstoffen.

5. Filme oder Folien nach Anspruch 4, die als organisches Polymer Polyamide, Celluloseacetat, Vinylalkoholmono- und -copolymere oder Vinylacetathomo- und -copolymere enthalten.

6. Filme oder Folien nach Anspruch 4, die als organisches Polymer Polyvinylalkohole enthalten, die durch vollständige oder teilweise Verseifung von Polyvinylaceat hergestellt worden sind.

7. Filme oder Folien nach Anspruch 6 mit Polyvinylalkoholen, die einen Verseifungsgrad > 80 Mol-% und eine Viskosität von größer als 4 mPas bei 20°C aufweisen.

8. Filme oder Folien gemäß Anspruch 4, die bezogen auf 100 Gew.-% Filmgewicht von 0,001 bis 10 Gew.-% Farbstoffe wie in Anspruch 1 genannt enthalten.

9. Filme oder Folien nach Anspruch 4, die bei einer Temperatur zwischen 60 und 180°C von 300 bis 1000 % gestreckt sind.

10. Verwendung der Filme oder Folien gemäß Anspruch 4 bis 9 als Polarisationsfilter.

## Claims

1. Dichroic dyestuffs which, in the form of the free acids, correspond to the general formula I 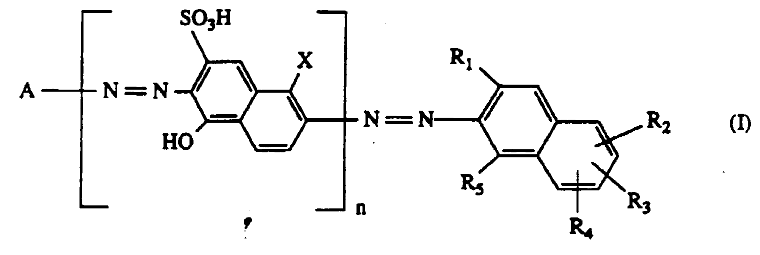 in which
n represents the numbers 1 or 2,
A denotes a radical 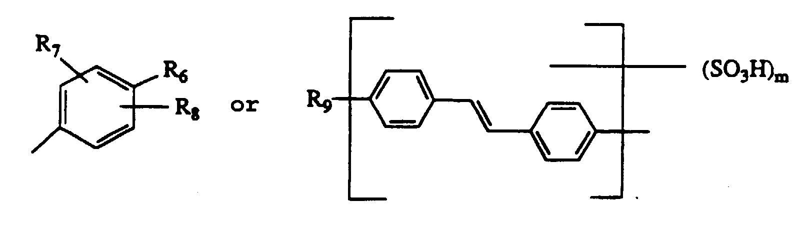
R₁ and R₃ independently of one another denote hydrogen or SO₃H,
R₂ denotes hydrogen, NH₂, NH-acyl, N(H)alkyl or NH-aryl,
R₄ denotes hydrogen, OH, OR, SO₃H, Cl or the radical -N=N-A'
in which
A' denotes the radical 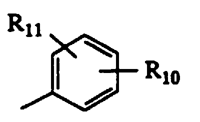
wherein
R₁₁ is H, NO₂, CN, OR, SO₃H, CF₃ or halogen or has the meaning given for the radicals R₂ or R,
R₁₀ is H, COOH, CN, NO₂, halogen, OH, OR or SO₃H or has the meaning given for the radicals R₂ or R
and
R is an aliphatic radical having up to 4 C atoms
and
R₅ denotes OH or N₂ and
X denotes Cl, SO₃H or H,
and furthermore
R₆ denotes NO₂, CN or CF₃ or has the meaning given for the radicals R₄ or R₂,
R₇ denotes COOH, CN, COOR, NO₂, halogen, OH, OR, R or SO₃H or has the meaning given for R₂,
R₈ denotes H, R or OR,
R₉ denotes NO₂, CN, COOR or the radical -N=N-A' or has the meaning given for R₂ and
m denotes the numbers 1 or 2.

2. Dichroic dyestuffs of the general formula III 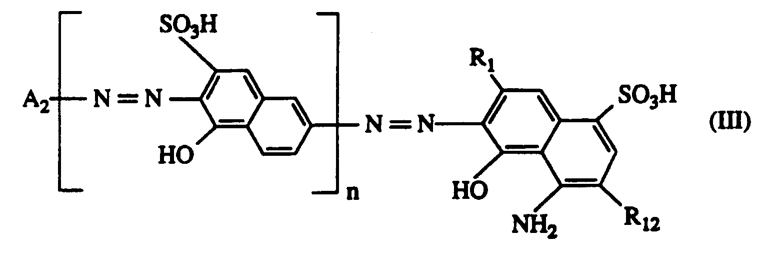 wherein
A₂ represents the radical 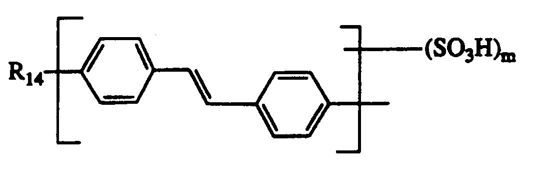 and
R₁₄ represents the radical 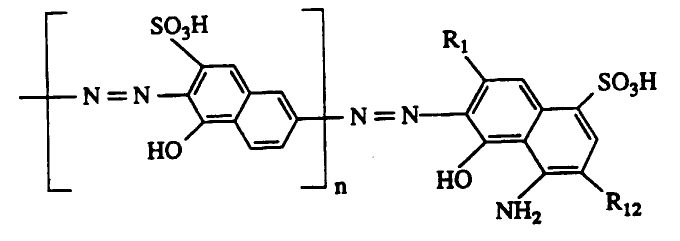
in which
R₁₂ if R₁ = H, denotes hydrogen, SO₃H or -N=N-A₁ and, if R₁ = SO₃H, denotes hydrogen or -N=N-A₁, wherein
A₁ denotes the radical 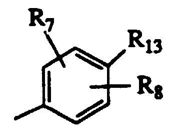 wherein
R₁₃ represents H, NO₂, CN, OR, SO₃H, Cl or the radical -N=N-A' or has the meaning given for the radical R₂ in formula I and
A', R₇, R₈ and R have the meaning given in the case of formula I in Claim 1
and
n or m denotes the numbers 1 or 2.

3. Use of the dyestuffs according to Claim 1 for the production of polarizing films or foils.

4. Light-polarizing films or foils comprising organic water-soluble polymers and one or more compounds of the formula I 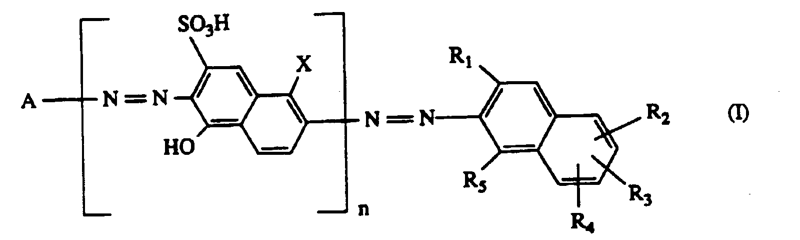 in which
n represents the numbers 1 or 2
and
the radicals A, R₁, R₂, R₃, R₄, R₅, X and A' have the meaning given in Claim 1 for the radicals in formula I, by themselves or as a mixture with other optionally dichroic dyestuffs.

5. Films or foils according to Claim 4, which comprise as the organic polymer polyamides, cellulose acetate, vinyl alcohol mono- and copolymers or vinyl acetate homo- and copolymers.

6. Films or foils according to Claim 4, which comprise, as the organic polymer, polyvinyl alcohols which have been prepared by complete or partial hydrolysis of polyvinyl acetate.

7. Films or foils according to Claim 6 with polyvinyl alcohols which have a degree of hydrolysis of > 80 mol% and a viscosity of greater than 4 mPas at 20°C.

8. Films or foils according to Claim 4, which comprise 0.001 to 10% by weight of dyestuffs as mentioned in Claim 1, based on 100% by weight of film weight.

9. Films or foils according to Claim 4, which are stretched from 300 to 1000% at a temperature between 60 and 180°C.

10. Use of the films or foils according to Claims 4 to 9 as polarization filters.

## Revendications

1. Colorants dichroïques qui, sous forme de l'acide libre, correspondent à la formule générale I 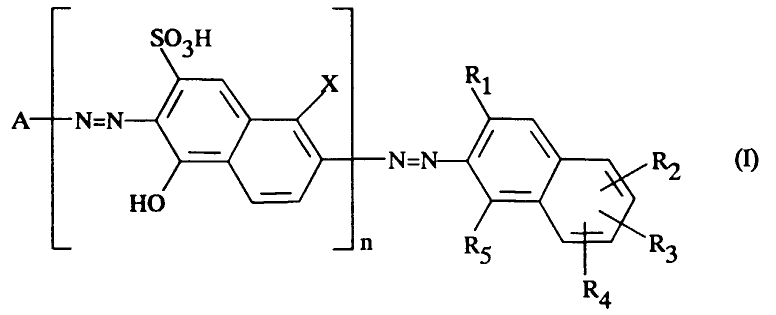 dans laquelle
n représente les nombres 1 ou 2,
A représente un reste 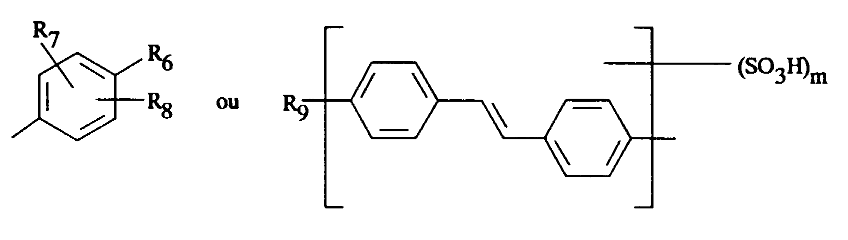
R₁ et R₃ représentent indépendamment l'un de l'autre l'hydrogène ou SO₃H
R₂ représente l'hydrogène, NH₂, NH-acyle, N(H)-alkyle, NH-aryle,
R₄ représente l'hydrogène, OH, OR, SO₃H, Cl ou le reste -N=N-A'
où
A' représente le reste 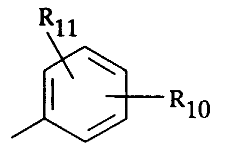 où
R₁₁ représente H, NO₂, CN, OR, SO₃H, CF₃, halogène ou a la signification indiquée pour les restes R₂ ou R,
R₁₀ représente H, COOH, CN, NO₂, halogène, OH, OR, SO₃H ou a la signification indiquée pour les restes R₂ ou R,
et
R représente un reste aliphatique pouvant avoir jusqu'à 4 atomes de C,
et
R₅ représente OH, NH₂ et
X représente Cl, SO₃H ou H
et en outre
R₆ représente NO₂, CN, CF₃ ou a la signification indiquée pour les restes R₄ ou R₂,
R₇ représente COOH, CN, COOR, NO₂, halogène, OH, OR, R, SO₃H ou a la signification indiquée pour R₂,
R₈ représente H, R, OR,
R₉ représente NO₂, CN, COOR, le reste -N=N-A', ou a la signification indiquée pour R₂ et
m représente les nombres 1 ou 2.

2. Colorants dichroïques de formule générale III 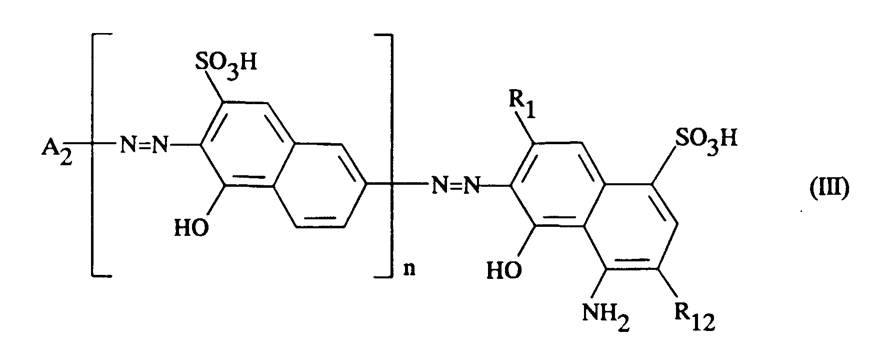 dans laquelle
A₂ représente le reste 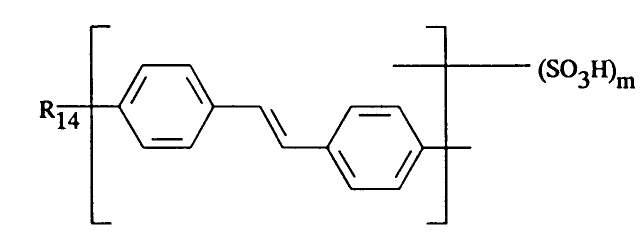 et
R₁₄ représente le reste 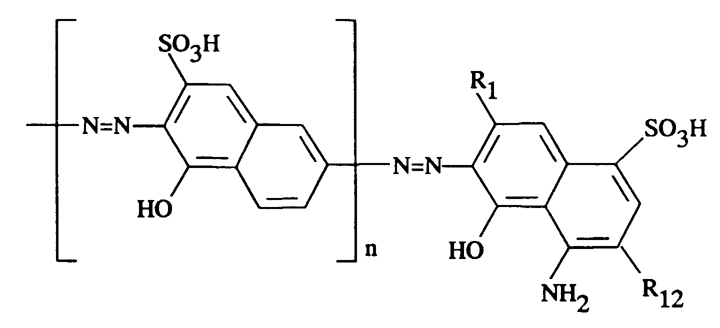 où
R₁₂ représente, pour R₁ = H, l'hydrogène, SO₃H ou -N=N-A₁ et, pour
R₁ = SO₃H, l'hydrogène ou -N=N-A₁, où
A₁ représente le reste 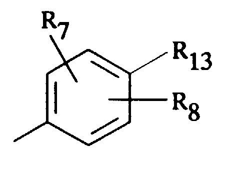 où
R₁₃ représente H, NO₂, CN, OR, SO₃H, Cl ou le reste -N=N-A' ou a la signification indiquée pour le reste R₂ dans la formule I et
A', R₇, R₈ et R ont la signification indiquée dans la revendication 1 pour la formule I,
et
n ou m représente les nombres 1 ou 2.

3. Utilisation des colorants selon la revendication 1, pour la fabrication de films ou feuilles polarisants.

4. Films ou feuilles polarisants contenant des polymères hydrosolubles organiques et un ou plusieurs composés de formule I 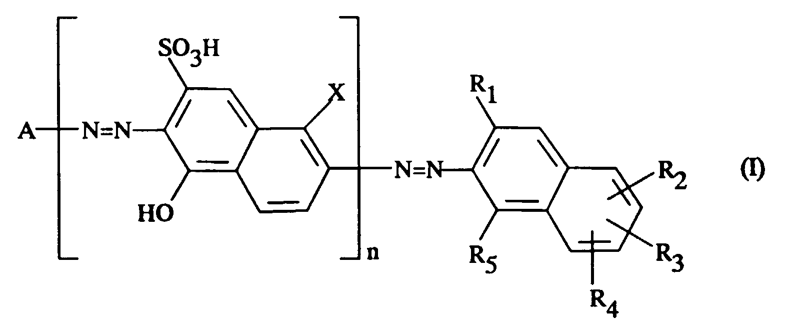 dans laquelle
n représente les nombres 1 ou 2,
et
les restes A, R₁, R₂, R₃, R₄, R₅, X et A' ont la signification indiquée dans la revendication 1 pour les restes de la formule I, seuls ou en mélange avec d'autres colorants éventuellement dichroïques.

5. Films ou feuilles selon la revendication 4 qui contiennent comme polymère organique des polyamides, l'acétate de cellulose, des mono- et copolymères d'alcool vinylique ou des homo- ou copolymères d'acétate de vinyle.

6. Films ou feuilles selon la revendication 4 qui contiennent comme polymère organique des poly(alcool vinylique) qui ont été préparés par saponification totale ou partielle de poly(acétate de vinyle).

7. Films ou feuilles selon la revendication 6 avec des poly(alcool vinylique) qui présentent un degré de saponification > 80 mol% et une viscosité supérieure à 4 mPas à 20°C.

8. Films ou feuilles selon la revendication 4 qui, pour 100 % en masse de masse de film, contiennent 0,001 à 10 % en masse de colorants tels que cités dans la revendication 1.

9. Films ou feuilles selon la revendication 4 qui sont étirés de 300 à 1 000 % à une température située entre 60 et 180°C.

10. Utilisation des films ou feuilles selon les revendications 4 à 9 comme filtres de polarisation.
